# EUROPEAN PATENT APPLICATION

(11) **EP 2 995 799 A1**
(43) Date of publication of application: **16.03.2016**
(21) Application number: 15181587.5
(22) Date of filing: 19.08.2015
(51) Int. Cl.: F02B 47/08

(54) **CONTROL APPARATUS FOR INTERNAL COMBUSTION ENGINE**

(30) Priority: 20.08.2014 JP 2014167883
(71) Applicant: Toyota Jidosha Kabushiki Kaisha, Toyota-shi, Aichi-ken 471-8571 (JP)
(72) Inventor: TANNO, Shiro, TOYOTA-SHI, AICHI-KEN, 471-8571 (JP)
(74) Representative: Intès, Didier Gérard André

(57) **Abstract**

An object of the present invention is to use a control apparatus for an internal combustion engine (1) equipped with a centrifugal compressor (60) and an EGR apparatus (7) to prevent a rotation speed of the centrifugal compressor (60) from exceeding a permissible rotation speed due to a back flow of intake air in an EGR passage (70). In order to achieve the object, the present invention provides a control apparatus including: a processing unit (8) configured to execute a back flow process causing a part of intake air to circulate in the EGR passage (70) from the intake passage (4) to the exhaust passage (9) by opening an EGR valve (71) when intake pressure on a downstream side of the centrifugal compressor (60) is higher than exhaust pressure; and correcting unit (8) configured to reduce an opening amount of the EGR valve (71) during execution of the back flow process when a rotation speed of the centrifugal compressor (60) is predicted to exceed a permissible rotation speed due to the execution of the back flow process.

## Description

### BACKGROUND OF THE INVENTION

### Field of the Invention

The present invention relates to a control apparatus for an internal combustion engine and particularly to a control apparatus for an internal combustion engine equipped with a centrifugal compressor and an EGR apparatus.

### Description of the Related Art

As a compressor for compressing air intake of an internal combustion engine, a turbocharger constituted by a turbine disposed in an exhaust passage and a compressor disposed in an intake passage is known. In addition, as an internal combustion engine including a turbocharger, an internal combustion engine is known which is equipped with an exhaust gas recirculation (EGR) apparatus that includes an EGR passage that guides a part of exhaust air from an exhaust passage on an upstream side of a turbine to an intake passage on a downstream side of a compressor and an EGR valve that adjusts an amount of gas flowing through the EGR passage.

In regards to an internal combustion engine including a turbocharger and an EGR apparatus, a technique is proposed which reduces a flow rate of exhaust air that flows into a turbine by opening an EGR valve when a rotation speed of the turbocharger is predicted to increase excessively (for example, refer to Japanese Patent Application Laid-open No. 2004-308487). In addition, a technique for reducing an EGR amount when a mass flow rate of air passing through a compressor of a turbocharger is lower than a surge mass flow rate is proposed (for example, refer to Japanese Translation of PCT Application No. 2007-510861).

### SUMMARY OF THE INVENTION

### Technical Problem

With an internal combustion engine including a turbocharger and an EGR apparatus, when intake pressure on a downstream side of a compressor is higher than exhaust pressure on an upstream side of a turbine, an EGR valve can conceivably be opened to cause a part of intake air to flow through an EGR passage in a direction opposite to EGR gas for the purpose of removing condensed water in the EGR passage and the like.

However, when the EGR valve is opened when the intake pressure on the downstream side of the compressor is higher than the exhaust pressure on the upstream side of the turbine and a rotation speed of the turbocharger is high, a load on the compressor decreases with a drop in the intake pressure on the downstream side of the compressor. As a result, the rotation speed of the turbocharger may possibly exceed a permissible rotation speed. Such a problem is not limited to a turbocharger that drives a centrifugal compressor using exhaust energy and may also occur in a construction in which a centrifugal compressor is driven using electrical energy.

The present invention has been made in consideration of various circumstances such as those described above and an object thereof is to provide a technique capable of preventing, in a control apparatus for an internal combustion engine including a centrifugal compressor and an EGR apparatus, a rotation speed of the centrifugal compressor from exceeding a permissible rotation speed due to a back flow of intake air in an EGR passage.

### Solution to Problem

In order to solve the problem described above, the present invention provides a control apparatus for an internal combustion engine equipped with a centrifugal compressor and an EGR apparatus, the control apparatus including: means for performing a back flow process causing a part of intake air to circulate in an EGR passage from an intake passage to an exhaust passage by opening an EGR valve when intake pressure on a downstream side of the centrifugal compressor is higher than exhaust pressure, wherein when it is predicted that a rotation speed of the centrifugal compressor may exceed a permissible rotation speed due to the execution of the back flow process, an opening amount of the EGR valve during execution of the back flow process is reduced.

More specifically, the present invention provides a control apparatus for an internal combustion engine, wherein the internal combustion engine comprises:
a centrifugal compressor that is arranged in an intake passage of the internal combustion engine and that is driven using electrical energy or exhaust energy of the internal combustion engine;
an EGR apparatus that includes an EGR passage that communicates an exhaust passage of the internal combustion engine with the intake passage on a downstream side of the centrifugal compressor, and an EGR valve that changes a passage sectional area of the EGR passage; and
an intake pressure sensor that detects pressure of intake air flowing through the intake passage on the downstream side of the centrifugal compressor,
the control apparatus comprising:
   an exhaust pressure acquiring unit configured to acquire pressure of exhaust air flowing through the exhaust passage;
   a processing unit configured to execute a back flow process causing a part of intake air to circulate in the EGR passage from the intake passage to the exhaust passage by opening the EGR valve when intake pressure detected by the intake pressure sensor is higher than exhaust pressure acquired by the exhaust pressure acquiring unit;
   a speed acquiring unit configured to acquire a rotation speed of the centrifugal compressor when the back flow process is executed by the processing unit; and
   a correcting unit configured to reduce an opening amount of the EGR valve during execution of the back flow process when a rotation speed acquired by the speed acquiring unit is higher than a prescribed rotation speed, as compared to a case where the rotation speed is equal to or lower than the prescribed rotation speed.

Moreover, in this case, the "prescribed rotation speed" refers to a rotation speed obtained by subtracting a prescribed margin from such a rotation speed that, if a back flow process is executed without correcting an opening amount of the EGR valve when the rotation speed of the centrifugal compressor is higher than the rotation speed, the rotation speed of the centrifugal compressor may conceivably exceed a permissible rotation speed. It is assumed that the "prescribed rotation speed" is obtained in advance by a conformity process performed through an experiment or the like.

According to a control apparatus for an internal combustion engine configured as described above, when the rotation speed of the centrifugal compressor during execution of the back flow process is higher than the prescribed rotation speed, an opening amount of the EGR valve during execution of the back flow process is set smaller than in a case where the rotation speed of the centrifugal compressor is equal to or lower than the prescribed rotation speed. Therefore, an amount of intake air that flows into the exhaust passage via the EGR passage from the intake passage on the downstream side of the centrifugal compressor during execution of the back flow process decreases and a degree of drop in intake pressure in the intake passage on the downstream side of the centrifugal compressor is reduced. As a result, a degree of decrease in a load of the centrifugal compressor is reduced and an amount of increase in the rotation speed of the centrifugal compressor is reduced. Therefore, the rotation speed of the centrifugal compressor is prevented from exceeding a permissible rotation speed due to a back flow of intake air into the EGR passage during execution of a back flow process.

Moreover, when a rotation speed acquired by the speed acquiring unit during execution of the back flow process is higher than the prescribed rotation speed, the correcting unit may reduce the opening amount of the EGR valve during execution of the back flow process as the rotation speed acquired by the speed acquiring unit increases. By correcting the opening amount of the EGR valve during execution of the back flow process in this manner, when the rotation speed of the centrifugal compressor during execution of the back flow process is higher than the prescribed rotation speed, the higher the rotation speed of the centrifugal compressor, the smaller the amount of intake air that flows backward in the EGR passage and, accordingly, a degree of drop of intake pressure in the intake passage on the downstream side of the centrifugal compressor is reduced and a degree of decrease in a load of the centrifugal compressor is also reduced. Therefore, the rotation speed of the centrifugal compressor is more reliably prevented from exceeding a permissible rotation speed due to a back flow of intake air into the EGR passage.

Moreover, a control apparatus for an internal combustion engine configured as described above is also effective when a separate compressor is arranged in an intake passage on an upstream side of the centrifugal compressor. In other words, the control apparatus is also effective with respect to a configuration in which the internal combustion engine according to the present invention includes: an upstream side compressor which is arranged in the intake passage on an upstream side of the centrifugal compressor and which is driven using electrical energy or kinetic energy of the internal combustion engine; a bypass passage which connects an intake passage on an upstream side of the upstream side compressor and an intake passage on a downstream side of the upstream side compressor and on an upstream side of the centrifugal compressor; and a switching valve which switches between a conductive state and a blocked state of the bypass passage, and the control apparatus further includes control unit configured to control switching of the switching valve and operation of the centrifugal compressor.

In a configuration in which intake air is supercharged in multiple stages by a plurality of compressors as described above, a situation where intake pressure on a downstream side of a rear stage centrifugal compressor becomes higher than exhaust pressure is more likely to occur and opportunities where a back flow process can be executed increase as compared to a case where intake air is supercharged by a single compressor. Therefore, there is a higher possibility of the rotation speed of the centrifugal compressor increasing excessively due to the execution of a back flow process. In consideration thereof, by correcting the opening amount of the EGR valve during execution of a back flow process as described above in a configuration including a plurality of compressors, a greater advantage may be gained by suppressing an excessive increase in the rotation of the centrifugal compressor.

However, in a configuration including a plurality of compressors, an amount of increase in the rotation of the centrifugal compressor during execution of a back flow process differs depending on states of the switching valve and the upstream side compressor. Let us now consider a case where the control unit switches between a first mode in which the switching valve blocks the bypass passage and the upstream side compressor is operated and a second mode in which the switching valve makes the bypass passage conductive and the upstream side compressor is stopped.

In the second mode, pressure of intake air flowing into the centrifugal compressor becomes approximately equal to atmospheric pressure in a similar manner to a case where the upstream side compressor is not arranged. In comparison, in the first mode, since intake air which has been compressed by the upstream side compressor and whose pressure is higher than atmospheric pressure flows into the centrifugal compressor, such high-pressure intake air must be further boosted by the centrifugal compressor. Therefore, a workload that the centrifugal compressor is required to perform in the first mode is larger than a workload that the centrifugal compressor is required to perform in the second mode.

In this case, a drop in intake pressure on a downstream side of the centrifugal compressor acts so as to increase the rotation speed of the centrifugal compressor. On the other hand, an increase in the workload that the centrifugal compressor is required to perform acts to lower the rotation speed of the centrifugal compressor. Therefore, it is conceivable that the larger the workload that the centrifugal compressor is required to perform, the smaller the amount of increase in the rotation of the centrifugal compressor during execution of a back flow process.

Based on the findings described above, the amount of increase in the rotation of the centrifugal compressor when it is assumed that the opening amount of the EGR valve is not corrected is conceivably smaller when a back flow process is executed in the first mode than when a back flow process is executed in the second mode. Therefore, the prescribed rotation speed is desirably set to a larger value when the switching valve and the upstream side compressor are controlled in the first mode as compared to when the switching valve and the upstream side compressor are controlled in the second mode.

As described above, when the prescribed rotation speed is changed in accordance with a control mode of the switching valve and the upstream side compressor, the rotation speed of the centrifugal compressor can be prevented from increasing excessively due to the execution of a back flow process regardless of which of the two modes described above the switching valve and the upstream side compressor are controlled in.

In this case, the processing unit according to the present invention may be configured to execute the back flow process when an amount of condensed water accumulated in the EGR passage is equal to or larger than a prescribed threshold and, at the same time, the intake pressure detected by the intake pressure sensor is higher than the exhaust pressure acquired by the exhaust pressure acquiring unit. Dissolution of an acidic substance contained in EGR gas by the condensed water accumulated in the EGR passage creates an acidic aqueous solution. When the acidic aqueous solution is introduced into the intake passage of the internal combustion engine, there is a possibility of corrosion of parts of the intake system. In contrast, by executing a back flow process when an amount of condensed water accumulated in the EGR passage is equal to or larger than the prescribed threshold, since the condensed water accumulated in the EGR passage is moved to the exhaust passage, an acidic aqueous solution is prevented from flowing into the intake passage during execution of subsequent EGR control and corrosion of the parts of the intake system is suppressed. Moreover, the threshold in this case refers to either an amount which, if the back flow process is executed when an accumulated amount of the condensed water is equal to or larger than this amount, there is a possibility that corrosion of parts of the intake system may occur as described above, or an amount obtained by subtracting a prescribed margin from this amount. The threshold is an amount experimentally obtained in advance.

In the present invention, a purpose of execution of the back flow process by the processing unit is not limited to the removal of condensed water accumulated in the EGR passage. For example, a state where intake pressure on a downstream side of the centrifugal compressor is higher than exhaust pressure is likely to occur when the internal combustion engine is operating under a high load. In such a state, a temperature of an exhaust gas control apparatus arranged in the exhaust passage is likely to rise excessively. In consideration thereof, by executing the back flow process, low temperature air can be supplied to the exhaust gas control apparatus to cool the exhaust gas control apparatus.

### Advantageous Effects of Invention

According to the present invention, with a control apparatus for an internal combustion engine including a centrifugal compressor and an EGR apparatus, a rotation speed of the centrifugal compressor can be prevented from increasing excessively due to a back flow of intake air in an EGR passage.

### BRIEF DESCRIPTION OF THE DRAWINGS

FIG. 1 is a diagram showing a schematic configuration of an internal combustion engine according to a first embodiment;
FIG. 2 is a first diagram showing a relationship between a rotation speed of a turbocharger and an opening amount correction coefficient of an EGR valve according to the first embodiment;
FIG. 3 is a second diagram showing a relationship between a rotation speed of a turbocharger and an opening amount correction coefficient of an EGR valve according to the first embodiment;
FIG. 4 is a flow chart showing a processing routine executed by an ECU when a back flow process is executed in the first embodiment;
FIG. 5 is a flow chart showing a processing routine executed by an ECU when an opening amount correction coefficient is determined in the first embodiment;
FIG. 6 is a diagram showing a schematic configuration of an internal combustion engine according to a second embodiment;
FIG. 7 is a diagram showing a relationship between a rotation speed of a turbocharger and an opening amount correction coefficient of an EGR valve according to the second embodiment; and
FIG. 8 is a flow chart showing a processing routine executed by an ECU when an opening amount correction coefficient is determined in the second embodiment.

### DESCRIPTION OF THE EMBODIMENTS

Hereinafter, specific embodiments of the present invention will be described with reference to the drawings. It is to be understood that dimensions, materials, shapes, relative arrangements, and the like of components described in the embodiments are not intended to limit the technical scope of the invention thereto unless otherwise noted.

### <Embodiment 1>

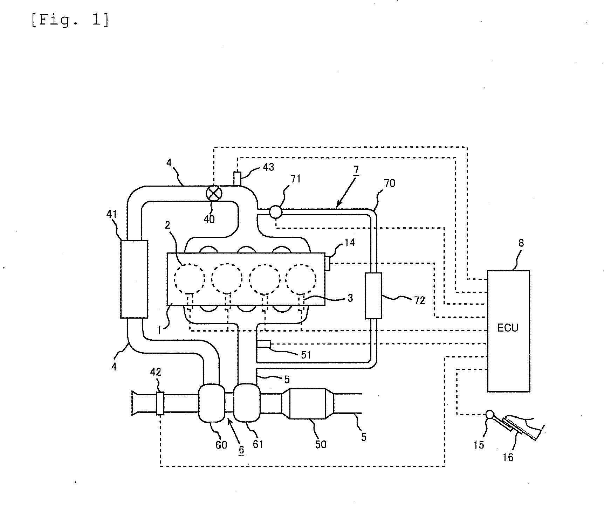

First, a first embodiment of the present invention will be described with reference to FIGS. 1 to 5. FIG. 1 is a diagram showing a schematic configuration of an internal combustion engine 1 to which the present invention is applied. The internal combustion engine 1 shown in FIG. 1 is a four-stroke cycle compression ignition internal combustion engine (diesel engine). Alternatively, the internal combustion engine 1 may be a spark ignition internal combustion engine (gasoline engine).

The internal combustion engine 1 includes a plurality of cylinders 2. Moreover, while the internal combustion engine 1 is shown in FIG. 1 to have four cylinders 2, the number of cylinders 2 may be 3 or less or 5 or more. The internal combustion engine 1 includes a fuel injection valve 3 for supplying fuel to each cylinder 2. The fuel injection valve 3 may be a valve apparatus that injects fuel into the cylinders 2 or a valve apparatus that injects fuel into an intake port.

1 The internal combustion engine 1 is connected to an intake pipe 4. The intake pipe 4 is a pipe for guiding fresh air (air) taken in from atmospheric air to the internal combustion engine 1. A throttle valve 40 is arranged midway along the intake pipe 4. The throttle valve 40 adjusts an amount of air flowing through the intake pipe 4 by changing a passage sectional area inside the intake pipe 4. An air flow meter 42 is arranged in the intake pipe 4 on an upstream side of the throttle valve 40. The air flow meter 42 is for measuring an amount (mass) of air flowing through the intake pipe 4.

In the intake pipe 4, a compressor 60 of a turbocharger 6 is arranged at a position between the throttle valve 40 and the air flow meter 42. The compressor 60 is a centrifugal compressor that compresses intake air when being driven by a turbine 61 (to be described later) and corresponds to the centrifugal compressor according to the present invention.

An intercooler 41 for cooling intake air which has been compressed by the compressor 60 and whose temperature has risen is arranged in the intake pipe 4 between the compressor 60 and the throttle valve 40. The intercooler 41 is, for example, an air-cooled heat exchanger that exchanges heat between outside air and intake air or a water-cooled heat exchanger that exchanges heat between cooling water and intake air.

In addition, the internal combustion engine 1 is connected to an exhaust pipe 5. The exhaust pipe 5 is a pipe for circulating gas (burned gas) that has been burned in the cylinders 2 of the internal combustion engine 1. An exhaust gas control apparatus 50 is arranged midway along the exhaust pipe 5. The exhaust gas control apparatus 50 houses a support that supports a catalyst inside a cylindrical casing. A catalyst in this case includes at least one of, for example, an oxidation catalyst, a three-way catalyst, a storage reduction catalyst, and a selective reduction catalyst.

In the exhaust pipe 5, the turbine 61 of the turbocharger 6 described earlier is arranged in a portion on an upstream side of the exhaust gas control apparatus 50. The turbine 61 is a motor which converts energy of exhaust air of the internal combustion engine 1 into rotational energy and which rotates and drives the compressor 60 (compressor wheel) using the converted rotational energy.

Next, the internal combustion engine 1 includes an EGR apparatus 7. The EGR apparatus 7 is an apparatus which includes an EGR passage 70, an EGR valve 71, and an EGR cooler 72 and which recirculates a part of exhaust air flowing through the exhaust pipe 5 into the intake pipe 4 as EGR gas. The EGR passage 70 communicates the exhaust pipe 5 on an upstream side of the turbine 61 with the intake pipe 4 on a downstream side of the throttle valve 40. The EGR valve 71 is provided midway along the EGR passage 70 and adjusts an amount of EGR gas by changing a passage sectional area of the EGR passage 70. The EGR cooler 72 is a heat exchanger which is provided midway along the EGR passage 70 and which exchanges heat between outside air or cooling water and EGR gas.

An electronic control unit (ECU) 8 is annexed to the internal combustion engine 1 configured as described above. The ECU 8 is an electronic control unit constituted by a CPU, a ROM, a RAM, a backup RAM, and the like. Various sensors including a crank position sensor 14, an accelerator position sensor 15, an intake pressure sensor 43, and an exhaust pressure sensor 51 in addition to the air flow meter 42 described earlier are electrically connected to the ECU 8. Output signals from the various sensors are to be input to the ECU 8.

The crank position sensor 14 is attached to the internal combustion engine 1 and detects a rotational position of a crankshaft. The accelerator position sensor 15 is attached to an accelerator pedal 16 and detects an operation amount of the accelerator pedal 16 (accelerator opening amount). The intake pressure sensor 43 is attached to the intake pipe 4 on a downstream side of the throttle valve 40 and measures pressure inside the intake pipe 4 (intake pressure). The exhaust pressure sensor 51 is attached to the exhaust pipe 5 on an upstream side of the turbine 61 and measures pressure inside the exhaust pipe 5.

In addition, the ECU 8 is electrically connected to various devices including the fuel injection valve 3, the throttle valve 40, and the EGR valve 71 described earlier and controls operations of the various devices. For example, the ECU 8 computes a rotation speed of the crankshaft (engine rotation speed) from an output signal of the crank position sensor 14 and, based on the engine rotation speed, an output signal of the accelerator position sensor 15 (accelerator opening amount), and the like, computes a target intake air amount of the internal combustion engine 1. The ECU 8 controls an opening amount of the throttle valve 40 so that an output signal of the air flow meter 42 (intake air amount) matches the target intake air amount. In addition, based on an output signal of the air flow meter 42 (intake air amount), an accelerator opening amount, an engine rotational speed, and the like, the ECU 8 controls a valve opening timing (fuel injection timing) and a valve opening period (fuel injection amount) of the fuel injection valve 3. Furthermore, when an operation state as identified from the engine rotation speed, an accelerator opening amount, and the like belongs to an EGR execution region determined in advance, the ECU 8 introduces a part of the exhaust air flowing through the exhaust pipe 5 into the intake pipe 4 as EGR gas by opening the EGR valve 71.

In order to guide EGR gas from the exhaust pipe 5 to the intake pipe 4 as described above, pressure at an exit portion of the EGR passage 70 (pressure inside the intake pipe on a downstream side of the throttle valve 40) must be lower than pressure at an entrance portion of the EGR passage 70 (pressure inside the exhaust pipe 5 on an upstream side of the turbine 61). Therefore, when the pressure at the exit portion of the EGR passage 70 is higher than the pressure at the entrance portion of the EGR passage 70 due to an operation of the turbocharger 6, EGR gas cannot be introduced into the intake pipe 4 from the exhaust pipe 5. In consideration thereof, in conventional EGR control the EGR valve 71 is closed when the pressure at the exit portion of the EGR passage 70 is higher than the pressure at the entrance portion of the EGR passage 70.

In contrast, in the present embodiment, when an amount of condensed water existing in an EGR path including the EGR passage 70 and the EGR cooler 72 is equal to or larger than a prescribed threshold, by opening the EGR valve 71 when the pressure at the exit portion of the EGR passage 70 is higher than the pressure at the entrance portion of the EGR passage 70, a process (back flow process) that causes a part of intake air to flow from the intake pipe 4 toward the exhaust pipe 5 in an opposite direction to the EGR gas is performed.

When temperature of the EGR gas that is present in the EGR path drops, condensed water may be created. When an acidic substance contained in the EGR gas is dissolved in condensed water created in this manner, an acidic aqueous solution is created. In addition, when the acidic aqueous solution flows into the intake pipe 4 together with the EGR gas, corrosion of parts of the intake system may possibly occur.

Therefore, in the present embodiment, when an amount of condensed water accumulated in the EGR path is equal to or larger than a prescribed threshold, the EGR valve 71 is opened upon a measurement value of the intake pressure sensor 43 (intake pressure) exceeding a measurement value of the exhaust pressure sensor 51 (exhaust pressure). When the EGR valve 71 is opened upon a measurement value of the intake pressure sensor 43 (intake pressure) exceeding a measurement value of the exhaust pressure sensor 51 (exhaust pressure), a part of intake air flowing in the intake pipe 4 flows through the EGR passage 70 in an opposite direction to the EGR gas and is introduced to the exhaust pipe 5. When intake air flows in an opposite direction to the EGR gas in this manner, since the condensed water accumulated in the EGR path is moved to the exhaust pipe 5, the condensed water is removed from the EGR path.

Moreover, while a target opening amount of the EGR valve 71 during execution of a back flow process may be changed in accordance with a difference between intake pressure and exhaust pressure, an amount of condensed water, or the like at the start of the back flow process, the target opening amount is desirably set to fully open from the perspective of promptly removing the condensed water.

However, when a back flow process such as that described above is executed, intake pressure on a downstream side of the compressor 60 drops which, in turn, causes a load on the turbocharger 6 to decrease. As a result, a rotation speed of the compressor 60 increases even though a drive force supplied from the turbine 61 to the compressor 60 does not change. Therefore, executing a back flow process such as that described above when a rotation speed of the compressor 60 is relatively high may possibly cause the rotation speed of the compressor 60 to exceed a permissible rotation speed.

To address the problem described above, in the present embodiment, an opening amount of the EGR valve 71 during execution of a back flow process is set smaller when the rotation speed of the compressor 60 is higher than a prescribed rotation speed than when the rotation speed of the compressor 60 is equal to or lower than the prescribed rotation speed. The "prescribed rotation speed" in this case refers to, for example, either a rotation speed such that, if an opening amount of the EGR valve 71 is set to a target opening amount (fully open) for execution of a back flow process when the rotation speed of the compressor 60 exceeds the prescribed rotation speed, the rotation speed of the compressor 60 may conceivably exceed a permissible rotation speed or a rotation speed obtained by subtracting a prescribed margin from such a rotation speed. The "prescribed rotation speed" is experimentally obtained in advance.

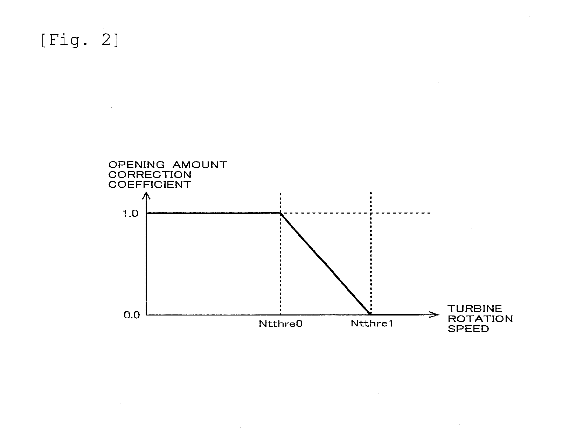

Specifically, the ECU 8 corrects the target opening amount of the EGR valve 71 during execution of a back flow process in accordance with an actual rotation speed of the compressor 60. A relationship between a rotation speed of the compressor 60 and an opening amount correction coefficient of the EGR valve 71 is shown in FIG. 2. The opening amount correction coefficient as used herein is a coefficient by which an opening amount of fully open (hereinafter, referred to as a "reference target opening amount") that is a target opening amount of the EGR valve 71 set for execution of a back flow process is to be multiplied. The EGR valve 71 during execution of a back flow process is controlled in accordance with an opening amount (target opening amount) that is corrected by a method involving multiplying the opening amount correction coefficient and the reference target opening amount.

As shown in FIG. 2, when the rotation speed of the compressor 60 is equal to or lower than the prescribed rotation speed (Ntthre0 in FIG. 2), since the rotation speed of the compressor 60 does not exceed the permissible rotation speed even if the opening amount of the EGR valve 71 is controlled to the reference target opening amount (fully open), the opening amount correction coefficient is set to "1.0". When a correction involving multiplying the reference target opening amount (fully open) by an opening amount correction coefficient of "1.0" is performed, the target opening amount after correction becomes equal to the reference target opening amount (fully open) prior to correction. In this case, the condensed water accumulated in the EGR path is promptly removed.

When the rotation speed of the compressor 60 exceeds the prescribed rotation speed Ntthre0, the opening amount correction coefficient is set to a value smaller than "1.0" and the higher the rotation speed of the compressor 60, the smaller the value to which the opening amount correction coefficient is set. When a correction involving multiplying the reference target opening amount (fully open) by an opening amount correction coefficient that is smaller than "1.0" is performed, the target opening amount after correction becomes smaller than the reference target opening amount (fully open) prior to correction. In this case, since an amount of intake air that flows from the intake pipe 4 on a downstream side of the compressor 60 through the EGR passage 70 and into the exhaust pipe 5 decreases, a degree of drop of intake pressure in the intake pipe 4 on a downstream side of the compressor 60 is reduced. As a result, a degree of decrease of the load on the compressor 60 is also reduced and an amount of increase in the rotation speed of the compressor 60 decreases. Therefore, the condensed water in the EGR path can be removed while preventing the rotation speed of the compressor 60 from exceeding the permissible rotation speed.

When the rotation speed of the compressor 60 is equal to or higher than an upper limit speed (Ntthre1 in FIG. 2) that is higher than the prescribed rotation speed Ntthre0, the opening amount correction coefficient is set to "0.0". The upper limit speed Ntthre1 in this case refers to, for example, a rotation speed obtained by subtracting a prescribed margin from such a rotation speed that, if the EGR valve 71 is opened even slightly when the rotation speed of the compressor 60 is equal to or higher than the upper limit speed Ntthre1, the rotation speed of the compressor 60 may conceivably exceed a permissible rotation speed. The upper limit speed Ntthre1 is experimentally obtained in advance. When a correction involving multiplying the reference target opening amount (fully open) by an opening amount correction coefficient of "0.0" is performed, the target opening amount after correction becomes zero (fully closed). In this case, the EGR valve 71 is not opened and a back flow process is substantially not executed. As a result, since a drop in intake pressure in the intake pipe 4 on a downstream side of the compressor 60 and a decline in the load on the compressor 60 are less likely to occur, an increase in the rotation speed of the compressor 60 is suppressed. Therefore, the rotation speed of the compressor 60 is prevented from exceeding the permissible rotation speed.

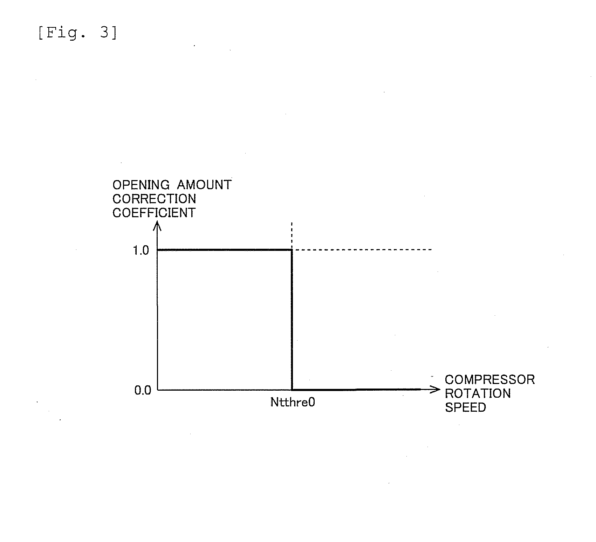

In the example shown in FIG. 2, a back flow process is to be performed while limiting an opening amount of the EGR valve 71 to a small value when the rotation speed of the compressor 60 is equal to or higher than the prescribed rotation speed Ntthre0 and lower than the upper limit speed Ntthre1. Alternatively, the opening amount correction coefficient may be set to "0.0" when the rotation speed of the compressor 60 is higher than the prescribed rotation speed Ntthre0 as shown in FIG. 3. In this case, the EGR valve 71 is not opened and a back flow process is substantially not executed. As a result, while opportunities for removing condensed water are reduced, the rotation speed of the compressor 60 can more reliably be prevented from increasing excessively.

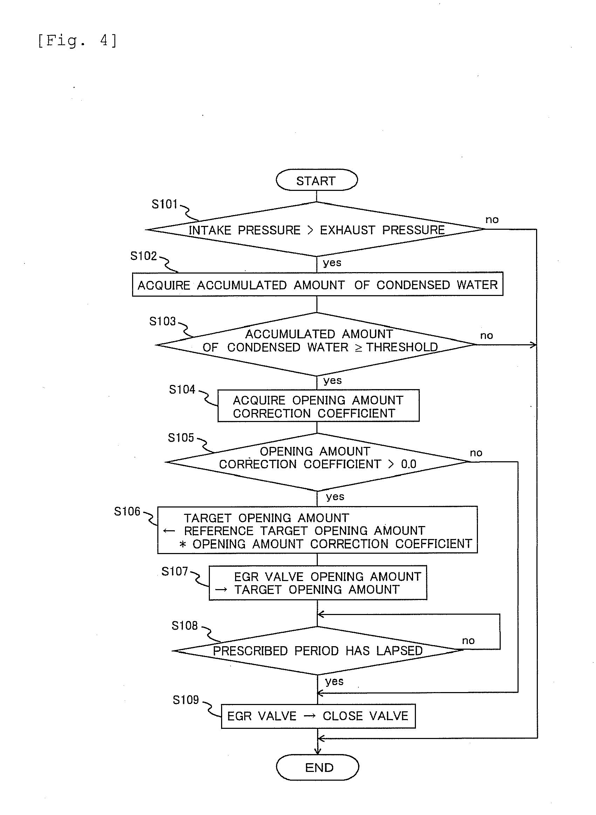

An execution procedure of a back flow process according to the present embodiment will now be described as shown in FIG. 4. FIG. 4 is a flow chart showing a processing routine that is executed by the ECU 8 when executing a back flow process. The processing routine is executed by the ECU 8 when a measurement value of the intake pressure sensor 43 (intake pressure) exceeds a measurement value of the exhaust pressure sensor 51 (exhaust pressure) (when EGR gas cannot be introduced from the exhaust pipe 5 to the intake pipe 4 and, at the same time, when the EGR valve 71 is in a close state (or when the EGR valve 71 is controlled to be closed)). The processing routine is stored in advance in the ROM of the ECU 8.

In the processing routine shown in FIG. 4, first, in a process in S101, the ECU 8 reads a measurement value of the intake pressure sensor 43 (intake pressure) and a measurement value of the exhaust pressure sensor 51 (exhaust pressure) and determines whether or not the intake pressure is higher than the exhaust pressure. Alternatively, pressure inside the exhaust pipe 5 on an upstream side of the turbine 61 may be estimated based on an operation state of the internal combustion engine 1, a state of the EGR valve 71, a state of the turbocharger 6, and the like. For example, exhaust pressure on an upstream side of the turbine 61 may be computed using the measurement value of the air flow meter 42 (intake air amount), a fuel injection amount, a workload of the turbocharger 6, and an opening amount of the EGR valve 71 as parameters. The exhaust pressure acquiring unit according to the present invention is realized as the ECU 8 reads a measurement value of the exhaust pressure sensor 51 or as the ECU 8 estimates exhaust pressure based on the parameters described above.

When a negative determination is made (intake pressure ≤ exhaust pressure) in the process in S101, the ECU 8 ends execution of the present processing routine without executing a back flow process. On the other hand, when a positive determination is made (intake pressure > exhaust pressure) in the process in S101, the ECU 8 proceeds to a process in S102. In the process in S102, the ECU 8 acquires an amount (accumulated amount) of condensed water accumulated in the EGR path. The accumulated amount of condensed water may be obtained by, for example, a method in which an amount of condensed water that is created in a unit time is calculated based on an operation state of the internal combustion engine 1 (an engine rotation speed, a fuel injection amount, an EGR gas amount, and the like) and an state of outside air (temperature, humidity, and the like), and aggregating the amount.

Alternatively, the accumulated amount of condensed water may be obtained by the method described below. Specifically, compositions of gas before and after combustion and a molecular weight of burned gas are calculated based on an air-fuel ratio identified from an intake air amount and a fuel injection amount and molecular weights of constituents of fuel and air, and a moisture content in burned gas (EPR gas) (absolute humidity of burned gas) is calculated based on vapor pressure, a molecular weight, density, and the like of the burned gas as obtained from the calculation results and a temperature and pressure of the burned gas. Next, a difference between a moisture content in the burned gas and a moisture content in the burned gas with a relative humidity of 100% when cooled is obtained, whereby an accumulated amount of condensed water may be obtained by aggregating the difference.

In the process in S103, the ECU 8 determines whether or not the accumulated amount of condensed water acquired in the process in S102 is equal to or larger than a prescribed threshold. The threshold in this case refers to an amount obtained by subtracting a prescribed margin from such an amount that, if EGR gas flows through the EGR path from the exhaust pipe 5 toward the intake pipe 4 when an accumulated amount of condensed water is equal to or larger than this amount, there is a possibility that corrosion of parts of the intake system may occur as described above. The threshold is an amount experimentally obtained in advance.

When a negative determination is made (accumulated amount of condensed water < threshold) in the process in S103, the ECU 8 ends execution of the present processing routine without executing a back flow process. On the other hand, when a positive determination is made (accumulated amount of condensed water ≥ threshold) in the process in S103, the ECU 8 proceeds to a process in S104.

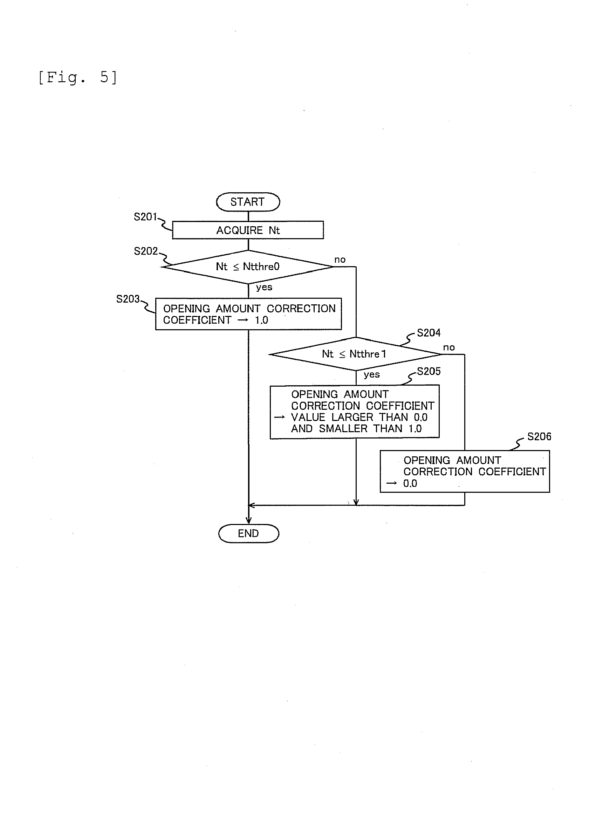

In the process in S104, the ECU 8 acquires an opening amount correction coefficient. In doing so, the ECU 8 determines the opening amount correction coefficient according to a subroutine such as that shown in FIG. 5. FIG. 5 is a flow chart showing a processing routine that is executed by the ECU 8 when determining an opening amount correction coefficient. The processing routine is stored in advance in the ROM of the ECU 8.

In the processing routine shown in FIG. 5, first, in S201, the ECU 8 acquires a rotation speed Nt of the compressor 60. The rotation speed Nt of the compressor 60 may be measured by a speed sensor attached to a bearing of the turbocharger 6. Alternatively, the rotation speed Nt of the compressor 60 may be computed by using a measurement value of the air flow meter 42 (intake air amount) and a ratio of entrance pressure and exit pressure of the compressor 60 as parameters. Alternatively, in a situation where fluctuation of the rotation speed of the compressor 60 is not significant, since the rotation speed of the compressor 60 is proportional to air flow (intake air amount), the rotation speed of the compressor 60 may be computed using only an intake air amount as a parameter.

In the process in S202, the ECU 8 determines whether or not the rotation speed Nt acquired in the process in S201 is equal to or lower than the prescribed rotation speed Ntthre0. When a positive determination (Nt ≤ Ntthre0) is made in the process in S202, the ECU 8 proceeds to a process in S203 and sets the opening amount correction coefficient to "1.0".

When a negative determination (Nt > Ntthre0) is made in the process in S202, the ECU 8 proceeds to a process in S204 and determines whether or not the rotation speed Nt acquired in the process in S201 is equal to or lower than the upper limit speed Ntthre1. When a positive determination (Nt ≤ Ntthre1) is made in the process in S204, the ECU 8 proceeds to a process in S205 and sets the opening amount correction coefficient to a value that is larger than 0.0 and smaller than 1.0. Specifically, the ECU 8 obtains an opening amount correction coefficient corresponding to the rotation speed Nt of the compressor 60 based on the relationship shown in FIG. 2 described earlier.

When a negative determination (Nt > Ntthre1) is made in the process in S204, the ECU 8 proceeds to a process in S206 and sets the opening amount correction coefficient to "0.0".

Returning now to the processing routine shown in FIG. 4, once the ECU 8 acquires an opening amount correction coefficient in the process in S104, the ECU 8 proceeds to a process in S105. In the process in S105, the ECU 8 determines whether or not the opening amount correction coefficient acquired in the process in S104 is equal to or larger than "0.0". When a positive determination is made (opening amount correction coefficient > 0.0) in the process in S105, the ECU 8 proceeds to a process in S106.

In the process in S106, the ECU 8 computes a target opening amount of the EGR valve 71 by multiplying the reference target opening amount (fully open) for execution of a back flow process by the opening amount correction coefficient acquired in the process in S104. Moreover, the correcting unit according to the present invention is realized as the ECU 8 executes the process in S104 (the processing routine shown in FIG. 5) and the process in S106.

In the process in S107, the ECU 8 starts a back flow process by opening the EGR valve 71 according to the target opening amount calculated in the process in S106. In doing so, since the opening amount correction coefficient is set to "1.0" if the rotation speed Nt of the compressor 60 is equal to or lower than the prescribed rotation speed Ntthre0, the opening amount of the EGR valve 71 during execution of the back flow process is equal to the reference target opening amount (fully open). In this case, the condensed water existing in the EGR path is promptly removed. In addition, since the opening amount correction coefficient is set to a value that is smaller than "1.0" and larger than "0.0" if the rotation speed Nt of the compressor 60 is higher than the prescribed rotation speed Ntthre0 and equal to or lower than the upper limit speed Ntthre1, the opening amount of the EGR valve 71 during execution of the back flow process is smaller than the reference target opening amount (fully open). In this case, the condensed water existing in the EGR path can be removed while preventing the rotation speed Nt of the compressor 60 from exceeding the permissible rotation speed.

In the process in S108, the ECU 8 determines whether or not a prescribed period has lapsed from the start of the execution of the back flow process. The prescribed period in this case refers to a period determining an execution period of the back flow process and corresponds to a period that is required for removal of the condensed water existing in the EGR path. Since the period that is required for removal of the condensed water existing in the EGR path varies depending on the accumulated amount of the condensed water, a difference between intake pressure and exhaust pressure, and an opening amount of the EGR valve 71, correlations among these values may be experimentally obtained in advance and the prescribed period may be determined based on the correlations.

When a negative determination is made in the process in S108, the ECU 8 repetitively executes the process in S108. Subsequently, when a positive determination is made in the process in S108, the ECU 8 proceeds to a process in S109 and ends the back flow process by closing the EGR valve 71. Moreover, when the measurement value of the intake pressure sensor 43 (intake pressure) drops to or below the measurement value of the exhaust pressure sensor 51 (exhaust pressure) before the prescribed period described with respect to the process in S108 lapses, it is assumed that execution of the back flow process ends at that point.

In addition, when a negative determination (opening amount correction coefficient = 0.0) is made in the process in S105, the ECU 8 skips the processes in S106 to S108 and proceeds to the process in S109. In this case, the EGR valve 71 is not opened and a back flow process is substantially not executed. As a result, an increase in the rotation speed of the compressor 60 is suppressed and the rotation speed is prevented from exceeding the permissible rotation speed.

The processing unit according to the present invention is realized as the ECU 8 executes the processing routine shown in FIG. 4.

When a back flow process is performed according to the procedure described above, an excessive increase in the rotation speed of the compressor 60 due to a back flow of intake air in the EGR path can be suppressed.

### <Embodiment 2>

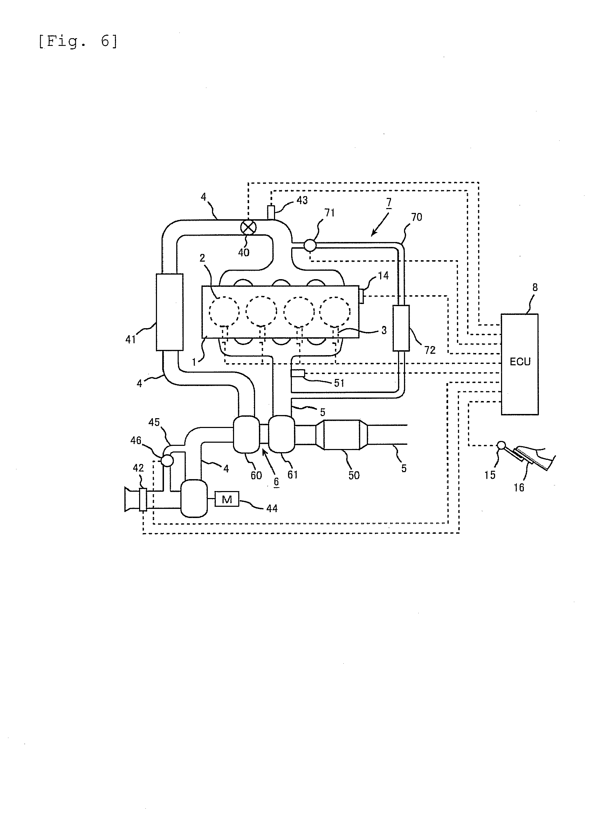

Next, a second embodiment of the present invention will be described with reference to FIGS. 6 to 8. Configurations that differ from those of the first embodiment described above will be described, and descriptions of similar configurations will be omitted.

While an example in which a single compressor is arranged in the intake pipe 4 of the internal combustion engine 1 is described in the first embodiment presented above, an example in which two compressors are arranged in the intake pipe 4 of the internal combustion engine 1 will be described in the present embodiment.

FIG. 6 is a diagram showing a schematic configuration of the internal combustion engine 1 according to the present embodiment. Moreover, in FIG. 6, components similar to those of the first embodiment described earlier are denoted by same reference numerals. As shown in FIG. 6, a compressor 44 that is driven by an electric motor M is arranged in an intake pipe 4 on an upstream side of a compressor 60. Hereinafter, the compressor 44 will be referred to as an upstream side compressor 44 and the compressor 60 will be referred to as a downstream side compressor 60.

An intake pipe 4 on an upstream side of the upstream side compressor 44 and an intake pipe 4 between the upstream side compressor 44 and the downstream side compressor 60 are connected by a bypass passage 45. A switching valve 46 that switches between blockage and conduction of the bypass passage 45 is arranged midway along the bypass passage 45.

Moreover, the electric motor M of the upstream side compressor 44 and the switching valve 46 are configured to be controlled by an ECU 8. For example, the ECU 8 switches modes between a first mode in which the bypass passage 45 is blocked by the switching valve 46 and the upstream side compressor 44 is operated (a drive current is supplied to the electric motor M) and a second mode in which the bypass passage 45 is made conductive by the switching valve 46 and the upstream side compressor 44 is stopped (the supply of the drive current to the electric motor M is stopped). In doing so, the ECU 8 may control the switching valve 46 and the upstream side compressor 44 in the first mode when a required torque of the internal combustion engine 1 is greater than a prescribed torque and may control the switching valve 46 and the upstream side compressor 44 in the second mode when the required torque of the internal combustion engine 1 is equal to or below the prescribed torque. The control unit according to the present invention is realized as the ECU 8 controls the switching valve 46 and the upstream side compressor 44 in this manner.

As shown in FIG. 6, in a configuration in which intake air is supercharged in multiple stages by the plurality of compressors 44 and 60, a situation where intake pressure on a downstream side of the downstream side compressor 60 becomes higher than exhaust pressure is more likely to occur and opportunities where a back flow process can be executed increase as compared to a configuration in which intake air is supercharged by a single compressor 60 as illustrated by the first embodiment. Therefore, an excessive increase in rotation of the downstream side compressor 60 due to the execution of a back flow process is also more likely to occur. In consideration thereof, by correcting the opening amount of an EGR valve 71 during execution of a back flow process in accordance with the rotation speed of the downstream side compressor 60 as described in the first embodiment in a configuration in which intake air is supercharged in multiple stages by the plurality of compressors 44 and 60, a greater advantage may be gained by suppressing an excessive increase in the rotation of the downstream side compressor 60.

However, an amount of increase in the rotation speed of the downstream side compressor 60 during execution of a back flow process shows different tendencies between the two modes described above. For example, in the second mode, pressure of intake air flowing into the downstream side compressor 60 becomes approximately equal to atmospheric pressure in a similar manner to a case where the upstream side compressor 44 is not arranged. In comparison, in the first mode, since intake air which has been compressed by the upstream side compressor 44 and whose pressure is higher than atmospheric pressure flows into the downstream side compressor 60, such high-pressure intake air must be further boosted by the downstream side compressor 60. Therefore, a workload that the downstream side compressor 60 is required to perform in the first mode is larger than a workload that the downstream side compressor 60 is required to perform in the second mode.

In this case, a drop in intake pressure on a downstream side of the downstream side compressor 60 acts so as to increase the rotation speed of the downstream side compressor 60. On the other hand, an increase in the workload that the downstream side compressor 60 is required to perform acts to lower the rotation speed of the downstream side compressor 60. Therefore, it is conceivable that the larger the workload that the downstream side compressor 60 is required to perform, the smaller the amount of increase in the rotation of the downstream side compressor 60 during execution of a back flow process.

As a result, the amount of increase in the rotation of the downstream side compressor 60 when the opening amount of the EGR valve during execution of a back flow process is controlled to the reference target opening amount is smaller when the switching valve 46 and the upstream side compressor 44 are controlled in the first mode than when the switching valve 46 and the upstream side compressor 44 are controlled in the second mode.

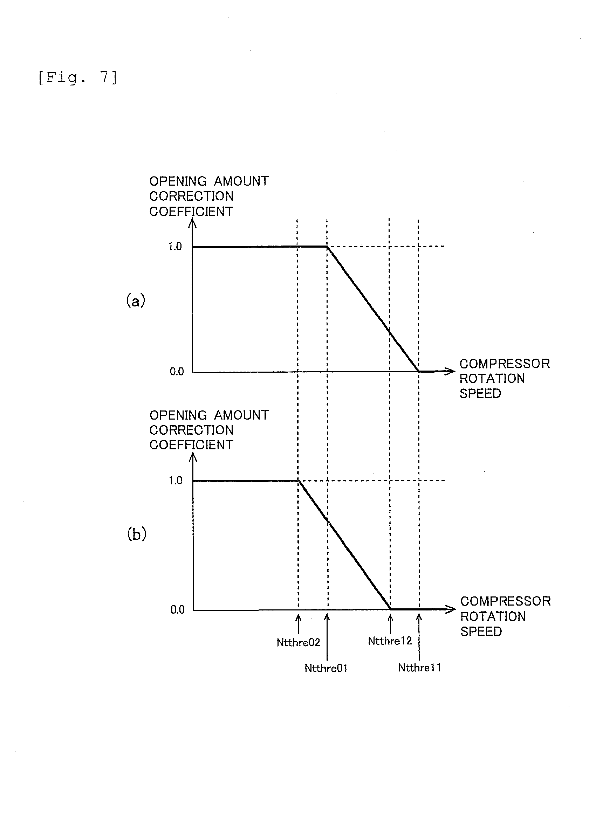

In consideration thereof, in the present embodiment, the opening amount correction coefficient described earlier is changed depending on the mode. FIG. 7 is a diagram showing a relationship between a rotation speed of the compressor 60 and the opening amount correction coefficient of the EGR valve 71. FIG. 7A shows a relationship between the rotation speed of the downstream side compressor 60 and the opening amount correction coefficient in the first mode. FIG. 7B shows a relationship between the rotation speed of the downstream side compressor 60 and the opening amount correction coefficient in the second mode.

As shown in FIG. 7, a prescribed rotation speed (Ntthre01 in FIG. 7) in the first mode is set higher than a prescribed rotation speed (Ntthre02 in FIG. 7) in the second mode, and an upper limit speed (Ntthre11 in FIG. 7) in the first mode is set higher than an upper limit speed (Ntthre12 in FIG. 7) in the second mode.

As shown in FIG. 7, when the prescribed rotation speed and the upper limit speed in each mode are set, if rotation speeds of the downstream side compressor 60 are equivalent, the opening amount correction coefficient in the first mode becomes equivalent to or larger than the opening amount correction coefficient in the second mode and, accordingly, an opening amount of the EGR valve 71 when a back flow process is executed in the first mode becomes equivalent to or larger than an opening amount of the EGR valve 71 when a back flow process is executed in the second mode.

As a result, the rotation speed Nt of the downstream side compressor 60 can be prevented from excessively increasing regardless of whether the back flow process is executed in the first mode or the second mode. Moreover, as shown in FIG. 3 described earlier, in a method in which the opening amount correction coefficient is set to "0.0" when the rotation speed of the downstream side compressor 60 is higher than the prescribed rotation speed Ntthre0, only the prescribed rotation speed Ntthre0 may be changed depending on the mode.

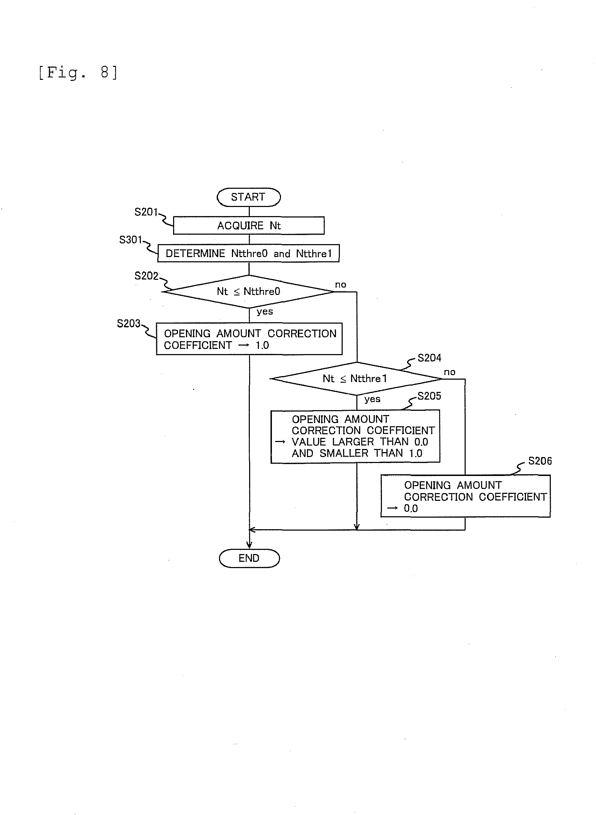

Hereinafter, a procedure of determining an opening amount correction coefficient according to the present embodiment will be described with reference to FIG. 8. FIG. 8 shows a processing routine that is executed by the ECU 8 when determining an opening amount correction coefficient. Moreover, in FIG. 8, processes similar to those of the processing routine shown in FIG. 5 described earlier are denoted by same reference numerals.

In the processing routine shown in FIG. 8, the ECU 8 executes a process in S301 after executing the process in S201. In the process in S301, the ECU 8 determines the prescribed rotation speed Ntthre0 and the upper limit speed Ntthre1 in accordance with a control mode of the switching valve 46 and the upstream side compressor 44. For example, when the control mode of the switching valve 46 and the upstream side compressor 44 is the first mode, the ECU 8 may set the prescribed rotation speed Ntthre0 and the upper limit speed Ntthre1 to magnitudes equivalent to Ntthre01 and Ntthre11 shown in FIG. 7A described earlier. In addition, when the control mode of the switching valve 46 and the upstream side compressor 44 is the second mode, the ECU 8 may set the prescribed rotation speed Ntthre0 and the upper limit speed Ntthre1 to magnitudes equivalent to Ntthre02 and Ntthre12 shown in FIG. 7B described earlier.

The ECU 8 executes processes in S202 and thereafter after executing the process in S301 described above. In doing so, in the process in S202, the ECU 8 is to determine whether or not the rotation speed Nt of the downstream side compressor 60 is equal to or lower than the prescribed rotation speed Ntthre0 determined in the process in S301. In addition, in the process in S204, the ECU 8 is to determine whether or not the rotation speed Nt of the downstream side compressor 60 is equal to or lower than the upper limit speed Ntthre1 determined in the process in S301.

When the opening amount correction coefficient is determined by such a procedure, regardless of which of the two modes described above the switching valve 46 and the upstream side compressor 44 are controlled in, the rotation speed Nt of the downstream side compressor 60 can be prevented from increasing excessively due to the execution of a back flow process.

Moreover, while an example in which the upstream side compressor 44 is driven by the electric motor M has been described in the present embodiment, a drive source of the upstream side compressor 44 is not limited to the electric motor M and may be output (rotational energy of a crankshaft) of the internal combustion engine 1. In this case, operation and stopping of the upstream side compressor 44 may be switched by interposing a clutch between the crankshaft and a rotary shaft of the upstream side compressor 44 and having the ECU 8 switch between engagement and release of the clutch.

### <Alternative Embodiment>

While examples in which a back flow process is performed for the purpose of removing condensed water accumulated in an EGR path have been described in the first and second embodiments presented above, the present invention can also be applied to cases where a back flow process is performed for other purposes.

For example, a situation where intake pressure becomes higher than exhaust pressure is likely to occur when the internal combustion engine 1 is operating under a high load. In such a case, a temperature of an exhaust gas control apparatus 50 is likely to rise excessively. Therefore, by executing the back flow process, conceivably, low temperature air can be supplied to the exhaust gas control apparatus 50 to cool the exhaust gas control apparatus 50.

However, executing a back flow process for the purpose of cooling the exhaust gas control apparatus 50 when the rotation speed of the compressor 60 is relatively high may possibly result in the rotation speed of the compressor 60 exceeding a permissible rotation speed in a similar manner to a case where a back flow process is executed for the purpose of removing condensed water.

In consideration thereof, if the rotation speed of the compressor 60 is higher than the permissible rotation speed when a back flow process for the purpose of cooling the exhaust gas control apparatus 50 is executed, desirably, an opening amount of the EGR valve 71 is limited to a small amount or opening of the EGR valve 71 is prohibited. By limiting an opening amount of the EGR valve 71 to a small amount or by prohibiting opening of the EGR valve 71, the rotation speed of the compressor 60 can be prevented from increasing excessively.

In addition, while the compressor 60 that is driven by the turbine 61 for converting exhaust energy of the internal combustion engine 1 into rotational energy or, in other words, the compressor 60 that is driven using exhaust energy of the internal combustion engine 1 has been exemplified as the centrifugal compressor according to the present invention in the first and second embodiments presented above, a back flow process can be performed by a similar procedure as those described in the first and second embodiments even in configurations using a centrifugal compressor that is driven by an electric motor in place of the compressor 60 described above. This is because a drop in intake pressure on a downstream side of the compressor due to the execution of the back flow process reduces a load on the electric motor and increases a rotation speed of the compressor.

### Reference Signs List

- 1: Internal combustion engine
- 2: Cylinder
- 3: Fuel injection valve
- 4: Intake pipe
- 5: Exhaust pipe
- 6: Turbocharger
- 7: EGR apparatus
- 8: ECU
- 43: Intake pressure sensor
- 44: Compressor (upstream side compressor)
- 45: Bypass passage
- 46: Switching valve
- 51: Exhaust pressure sensor
- 60: Compressor (downstream side compressor)
- 61: Turbine
- 70: EGR passage
- 71: EGR valve
- 72: EGR cooler

## Claims

1. A control apparatus for an internal combustion engine (1), wherein the internal combustion engine comprises:
a centrifugal compressor (60) that is arranged in an intake passage (4) of the internal combustion engine (1) and that is driven using electrical energy or exhaust energy of the internal combustion engine;
an EGR apparatus (7) that includes an EGR passage (70) that connects an exhaust passage (5) of the internal combustion engine with the intake passage (4) on a downstream side of the centrifugal compressor (60), and an EGR valve (71) that changes a passage sectional area of the EGR passage (70); and
an intake pressure sensor (43) that detects pressure of intake air flowing through the intake passage (4) on the downstream side of the centrifugal compressor (60),
the control apparatus comprising:
an exhaust pressure acquiring unit configured to aquire pressure of exhaust air flowing through the exhaust passage (5);
a processing unit (8) configured to execute a back flow process causing a part of intake air to circulate in the EGR passage from the intake passage to the exhaust passage by opening the EGR valve when intake pressure detected by the intake pressure sensor (43) is higher than exhaust pressure acquired by the exhaust pressure acquiring unit;
a speed acquiring unit (8) configured to aquire a rotation speed (Nt) of the centrifugal compressor (60) when the back flow process is executed by the processing unit; and
a correcting unit (8) configured to reduce an opening amount of the EGR valve (71) during execution of the back flow process when a rotation speed (Nt) acquired by the speed acquiring unit (8) is higher than a prescribed rotation speed (Ntthre0), as compared to a case where the rotation speed (Nt) is equal to or lower than the prescribed rotation speed (Ntthre0).

2. The control apparatus for an internal combustion engine according to claim 1, wherein when a rotation speed (Nt) acquired by the speed acquiring unit (8) during execution of the back flow process by the processing unit is higher than the prescribed rotation speed (Ntthre0), the correcting unit reduces the opening amount of the EGR valve (71) during execution of the back flow process as the rotation speed acquired by the speed acquiring unit increases.

3. The control apparatus for an internal combustion engine according to claim 1 or 2, wherein the internal combustion engine further comprises:
an upstream side compressor (44) that is arranged in the intake passage (4) on an upstream side of the centrifugal compressor (60) and that is driven using electrical energy or kinetic energy of the internal combustion engine (1);
a bypass passage (45) that connects the intake passage (4) on an upstream side of the upstream side compressor (44) and the intake passage (4) on a downstream side of the upstream side compressor and on an upstream side of the centrifugal compressor (60), and that bypasses the upstream side compressor (44); and
a switching valve (46) that switches between a conductive state and a blocked state of the bypass passage (45),
the control apparatus further comprising:
a control unit (8) configured to control switching of the switching valve (46) and operation of the centrifugal compressor (60), and to implement switching between a first mode, in which the switching valve (46) blocks the bypass passage (45) and the upstream side compressor (44) is operated, and a second mode, in which the switching valve (46) causes the bypass passage to be conductive and the upstream side compressor (44) to be stopped,
wherein the prescribed rotation speed is set to a larger value when the switching valve (46) and the upstream side compressor (44) are controlled in the first mode, as compared to when the switching valve and the upstream side compressor are controlled in the second mode.

4. The control apparatus for an internal combustion engine according to any one of claims 1 to 3, wherein the processing unit executes the back flow process when an amount of condensed water accumulated in the EGR passage (70) is equal to or larger than a prescribed threshold and, at the same time, intake pressure detected by the intake pressure sensor (43) is higher than exhaust pressure acquired by the exhaust pressure acquiring unit.
